# EUROPÄISCHE PATENTSCHRIFT

(11) **EP 1 190 929 B1**
(45) Veröffentlichungstag und Bekanntmachung des Hinweises auf die Patenterteilung: **06.02.2008**
(21) Anmeldenummer: 01122112.4
(22) Anmeldetag: 14.09.2001
(51) Int. Cl.: B62B 3/06

(54) **Flurförderzeug mit einem gabelförmigen Lastaufnahmemittel**
Industrial truck with a fork-shaped load handling device
Chariot de manutention avec un dispositif porte-charge en forme de fourche

(30) Priorität: 20.09.2000 DE 10046667
(43) Veröffentlichungstag der Anmeldung: 27.03.2002
(73) Patentinhaber: STILL WAGNER GmbH & Co KG, 72766 Reutlingen-Mittelstadt (DE)
(72) Erfinder: Schadenberger, Martin, 72555 Metzingen (DE); Huber, Joachim, 72768 Reutlingen (DE)
(74) Vertreter: Geirhos, Johann

(56) Entgegenhaltungen:
- DE-A- 4 430 728
- US-A- 1 569 971
- US-A- 3 559 953

## Beschreibung

Die Erfindung betrifft ein Flurförderzeug mit einem gabelförmigen Lastaufnahmemittel zum Aufnehmen von Paletten, wobei auf der Oberseite des Lastaufnahmemittels, zumindest im Bereich einer Spitze des Lastaufnahmemittels, mindestens ein Mittel zum Erhöhen eines Reibungsbeiwertes angeordnet ist.

Lastaufnahmemittel von Flurförderzeugen sind häufig von Traggabeln gebildet, die an einem Hubgerüst auf- und abbewegbar befestigt sind. Mit derartigen Traggabeln können Paletten angehoben, transportiert und gestapelt werden. Ebenso bekannt sind Lastgabeln von Niederhub-Flurförderzeugen, mit denen eine Palette um einige Zentimeter angehoben und anschließend transportiert werden kann. Derartige Lastgabeln stützen sich mit verstellbaren Lastrollen auf einer Fahrbahnoberfläche ab. Im normalen Lagerbetrieb wird eine Palette mit dem Lastaufnahmemittel vollständig unterfahren, angehoben und anschließend transportiert.

In der Praxis treten jedoch immer wieder Transportsituationen auf, bei denen eine Palette lediglich mit der Gabelspitze unterfahren wird, die Palette mit dem Lastaufnahmemittel einseitig angehoben wird und anschließend schleifend über die Fahrbahn gezogen wird. Bei diesem Vorgang kommt es häufig vor, dass die Palette von der Gabelspitze rutscht und zum Fortsetzen des Vorgangs das Lastaufnahmemittel abgesenkt, unter die Palette gefahren und erneut angehoben werden muss.

Aus der US 3 559 953 A ist ein Gabelhubwagen zum Bewegen von Paletten bekannt, bei dem die Gabeloberseiten mit Spikes bestückt sind. Diese Spikes gewährleisten zwar eine rutschsichere Verbindung zwischen Gabel und Palette, führen aber auch zu einer Beschädigung der Palettenunterseite und sind darüber hinaus aufwändig in der Herstellung.

Der Erfindung liegt daher die Aufgabe zugrunde, ein einfach herstellbares Flurförderzeug zur Verfügung zu stellen, mit dem ein beschädigungsfreies Handhaben von Paletten in der oben beschriebenen Weise ermöglicht wird.

Diese Aufgabe wird erfindungsgemäß dadurch gelöst, dass die Mittel zum Erhöhen eines Reibungsbeiwertes von Schweißpunkten gebildet sind. Die hervorstehenden Elemente bestehen dabei annähernd vollständig aus dem bei dem Schweißvorgang aufgebrachten Schweißzusatzwerkstoff.

Durch Erhöhen der Reibung zwischen der Oberseite des Lastaufnahmemittels und der Palette kann ein Abrutschen der Palette von dem Lastaufnahmemittel verhindert werden, wenn diese über den Boden gezogen wird. Diese beschriebene Betriebsweise des Flurförderzeugs wird dabei gleichzeitig effizienter und sicherer. Maßgeblicher Reibungsbeiwert ist im vorliegenden Zusammenhang insbesondere der Haftreibungsbeiwert zwischen dem Lastaufnahmemittel und einer Palette. Zweckmäßigerweise sind die Mittel zum Erhöhen des Reibungsbeiwertes von Elementen gebildet, die aus der Oberseite des Lastaufnahmemittels hervorstehen. Die hervorstehenden Elemente drücken sich geringfügig in das Material der Palette ein und bewirken dadurch eine erhebliche Reibungserhöhung. Die hervorstehenden Elemente sind dabei so geformt, dass sie das Material der in der Regel aus Holz bestehenden Palette nicht beschädigen, insbesondere weisen die hervorstehenden Elemente abgerundete Kanten auf. Der Verschleiß der Mittel zum Erhöhen des Reibungsbeiwertes kann minimiert werden, wenn die aus der Oberseite des Lastaufnahmemittels hervorstehenden Elemente aus Metall ausgebildet sind.

Gemäß einer bevorzugten Ausführungsform erstrecken sich die Mittel zum Erhöhen eines Reibungsbeiwertes ausschließlich auf die Spitze des Lastaufnahmemittels. Die Spitze des Lastaufnahmemittels ist dabei definiert als der Bereich zwischen dem Gabelende und den unter den Gabeln angeordneten Lastrollen. Der Bereich, in dem sich die Mittel zum Erhöhen eines Reibungsbeiwertes befinden, weist dabei eine Länge von ca. 10 cm, höchstens von 20 cm auf.

Weitere Vorteile und Einzelheiten der Erfindung werden anhand des in den schematischen Figuren dargestellten Ausführungsbeispiels näher erläutert. Dabei zeigt
- Figur 1: ein erfindungsgemäßes Lastaufnahmemittel in Seitenansicht,
- Figur 2: eine Gabelzinke des Lastaufnahmemittels in Draufsicht.

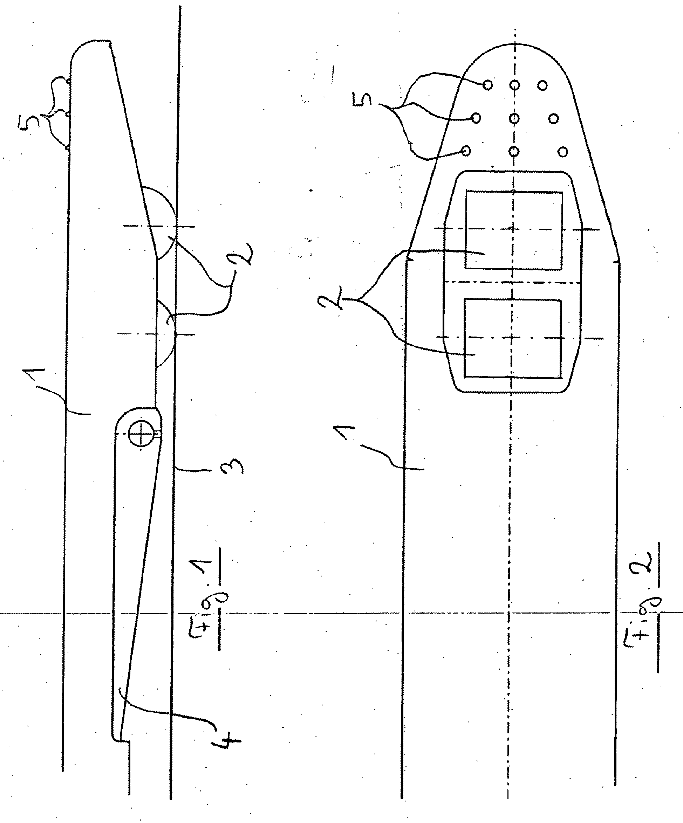

Figur 1 zeigt ein erfindungsgemäßes Lastaufnahmemittel in Seitenansicht. Eine Gabelzinke 1 steht mit zwei Lastrollen 2 auf der Fahrbahn 3 auf. Zu erkennen ist ein Teil einer Hebelanordnung 4, mit der der vertikale Abstand zwischen Gabelzinke 1 und Lastrollen 2 verstellt werden kann. Erfindungsgemäß sind im Bereich der Gabelspitze, auf der Oberseite der Gabelzinke 1, Mittel 5 zum Erhöhen des Reibwertes angeordnet, die im vorliegenden Ausführungsbeispiel von durch Schweißen aufgebrachten Erhöhungen gebildet sind. Bei dem Anheben einer Palette drücken sich diese Erhöhungen in die Unterseite des oberen Palettenbretts ein und verhindern dadurch ein Abrutschen der Palette von dem Lastaufnahmemittel.

Figur 2 zeigt eine Gabelzinke 1 des Lastaufnahmemittels in Draufsicht. Ein üblicherweise verwendetes Lastaufnahmemittel besteht aus zwei derartigen Gabelzinken 2, die parallel voneinander beabstandet angeordnet sind. Zu erkennen sind insbesondere die im vorliegenden Ausführungsbeispiel neun Mittel 5 zum Erhöhen des Reibwertes, die auf der Oberseite der Gabelspitze angeordnet sind.

## Patentansprüche

1. Flurförderzeug mit einem gabelförmigen Lastaufnahmemittel zum Aufnehmen von Paletten, wobei auf der Oberseite des Lastaufnahmemittels, zumindest im Bereich einer Spitze des Lastaufnahmemittels, mindestens ein Mittel (5) zum Erhöhen eines Reibungsbeiwertes angeordnet ist, **dadurch gekennzeichnet, dass** die Mittel (5) zum Erhöhen eines Reibungsbeiwertes von Schweißpunkten gebildet sind.

2. Flurförderzeug nach Anspruch 1, **dadurch gekennzeichnet, dass** die Mittel (5) zum Erhöhen eines Reibungsbeiwertes sich ausschließlich auf die Spitze des Lastaufnahmemittels erstrecken.

## Claims

1. Industrial truck with a fork-shaped load handling device for receiving pallets, at least one means (5) for increasing a coefficient of friction being arranged on the upper side of the load handling device, at least in the region of a tip of the load handling device, **characterised in that** the means (5) for increasing a coefficient of friction are formed by weld points.

2. Industrial truck according to claim 1, **characterised in that** the means (5) for increasing a coefficient of friction extend exclusively to the tip of the load handling device.

## Revendications

1. Chariot de manutention comportant un dispositif porte-charge en forme de fourche pour recevoir des palettes,
le côté supérieur du dispositif porte-charge ayant au moins, au niveau d'une de ses pointes, au moins un moyen (5) pour augmenter le coefficient de friction,
**caractérisé en ce que**
les moyens (5) pour augmenter le coefficient de friction sont des points de soudure.

2. Chariot de manutention selon la revendication 1,
**caractérisé en ce que**
les moyens (5) pour augmenter le coefficient de friction sont prévus exclusivement sur la pointe du moyen de support de charge.
